# EUROPEAN PATENT APPLICATION

(11) **EP 2 849 042 A1**
(43) Date of publication of application: **18.03.2015**
(21) Application number: 14185182.4
(22) Date of filing: 17.09.2014
(51) Int. Cl.: G06F 3/048, H04M 1/725

(54) **Method, apparatus and electronic device for displaying notice information**

(30) Priority: 17.09.2013 CN 201310424863
(71) Applicant: Xiaomi Inc., Beijing 100085 (CN)
(72) Inventor: Sun, Peng, 100085 Haidian Distirct (CN); Wang, Wenlin, 100085 Haidian Distirct (CN); Li, Weixing, 100085 Haidian Distirct (CN)
(74) Representative: Robson, Aidan John

(57) **Abstract**

The embodiments of the present disclosure provide a method, an apparatus, and an electronic device for displaying notice information. The method comprises: receiving the notice information sent from the application program; displaying the notice information in a predetermined area. The predetermined area is an area displaying a status bar, or an area adjacent to the status bar, and the status bar is arranged along an edge of a display. The disclosure, by displaying the notice information in the area adjacent to the status bar, or the area displaying the status bar, solves the problem that the method of displaying the current notice information has the impact on the current user operation, to achieve a result which does not influence the user operation when informing the new notice information to users.

## Description

### TECHNICAL FIELD

The application relates to a field of computer technology, in particular to a method, a device and an electronic device for displaying notice information.

### BACKGROUND

When an application program generates notice information in the electronic device such as a new message or a new calling, etc. there is a need to display the notice information on the electronic device for a user to check and manage the notice information.

A currently existing method for displaying the notice information is: after receiving the notice information, a prompt box corresponding to the notice information can be displayed with the highest priority on the middle of display screen in the electronic device. That is, the user may firstly need to deal with contents on the prompt box or close the prompt box when the user needs to carry out other operations.

In implementing the present disclosure, the inventors find out that at least the problems exist in the prior art as described following: when the user is implementing the game operations or browsing the webpages, if there has the prompt box corresponding to the notice information jumped in the middle of the display screen, the user may, to continue to implement the game operations or browsing the webpage, be forced to process the contents on the prompt box or close the prompt box firstly. Therefore, this method for displaying the notice information may have an impact on current user operations.

### SUMMARY

Embodiments of the present invention provide a method, a device, and an electronic device for displaying notice information, to solve the problem that the method of displaying the notice information has the impact on the current user operation. The technical solutions are as follows:

A method for displaying notice information is provided according to a first embodiment of the present invention. The method may include: receiving the notice information sent from an application program, the received notice information including one or more operation elements provided by the application program; and displaying the received notice information in a predetermined area, the predetermined area being an area displaying a status bar, or an area adjacent to the status bar, the status bar being arranged along an edge of a display.

In the first possible embodiment, the method may further include: receiving operation information generated when an operation element displayed in the received notice information is operated; and sending the operation information to the application program to process, wherein the application program implements a process according to the operation information.

In the first possible embodiment, the method may further include: deleting the displayed notice information after receiving the operation information generated.

In the first possible embodiment, the method may further include: receiving an unfolding instruction generated when an unfolding operation on the displayed notice information is performed; and displaying the unfolded notice information after receiving the unfolding instruction.

In the first possible embodiment, the method may further include: receiving a hiding instruction, the instruction being generated when an operating position is not located in the predetermined area; and hiding the displayed notice information.

In the first possible embodiment, when the predetermined area is the area displaying the status bar, displaying the notice information in the predetermined area may include: determining a notice level corresponding to the received notice information, the notice level indicating a rank of importance of the received notice information; determining a display height of the received notice information according to content and/or the notice level of the received notice information; extending a display height of the status bar according to the display height of the received notice information; and displaying the notice information in the status bar with the extended height.

In the first possible embodiment, the predetermined area may include at least one display page, and the displaying the notice information in the predetermined area may include: determining whether a number of pieces of notice information that are already displayed on a current display page in the predetermined area is less than a predetermined number, the predetermined number being a maximum number of pieces of notice information that can be displayed on the current display page in the predetermined area; if it is determined that the number of pieces of notice information that are already displayed on the current display page in the predetermined area is less than the predetermined number, displaying the received notice information on the current display page in the predetermined area; and if it is determined that the number of pieces of notice information that are already displayed on the current display page in the predetermined area is not less than the predetermined number, refreshing the position of a piece of the notice information having a longest display time on the current display page in the predetermined area to display the received notice information.

In the first possible embodiment, the method may further include: receiving a page turning signal that instructs a page turning of the current display page in the predetermined area; and turning the current display page in the predetermined area to another display page corresponding to the page turning signal.

In the first possible embodiment, turning the current display page in the predetermined area to another display page corresponding to the page turning signal may include: when the page turning signal instructs to turn the current display page in the predetermined area to a next display page and a next display page exists in the predetermined area, turning the current display page in the predetermined area to the next display page; and when the page turning signal instructs to turn the display page in the predetermined area to a previous page and a previous display page exists in the predetermined area, turning the current display page in the predetermined area to the previous display page.

An apparatus for displaying the notice information is provided according to a second possible embodiment of the present invention. The apparatus may include: a notice information receiving module configured to receive notice information sent from an application program, the received notice information including one or more operation elements provided by the application program; and a display module configured to display the received notice information in a predetermined area, the predetermined area being an area displaying a status bar, or an area adjacent to the status bar, the status bar being arranged along an edge of a display.

In the second possible embodiment, the apparatus may further include: an operation information receiving module configured to receive operation information generated when an operation element displayed in the received notice information is operated; and an sending module configured to send the operation information into the application program to process, wherein the application program implements a process according to the operation information.

In the second possible embodiment, the apparatus may further include: a deleting module configured to delete the displayed notice information after the operation receiving module receives the operation information generated.

In the second possible embodiment, the apparatus may further include: an unfolding instruction receiving module configured to receive an unfolding instruction generated when an unfolding operation on the displayed notice information is performed; and an unfolding display module configured to display the unfolded notice information after the unfolding display module receives the unfolding instruction.

In the second possible embodiment, the apparatus may further include: a hiding instruction receiving module configured to receive a hiding instruction, the instruction being generated when an operating position is not located in the predetermined area; and a hiding module configured to hide the displayed notice information.

In the second possible embodiment, when the predetermined area is the area displayed in the status bar, the display module may include: a notice level determining sub-module configured to determine a notice level corresponding to the received notice information, the notice level indicating a rank of importance of the received notice information; a first determining sub-module configured to determine a display height of the received notice information according to content and/or the notice level of the notice information; and a second determining sub-module configured to extend a display height of the status bar according to the display height of the received notice information; and a first display sub-module configured to display the notice information in the status bar with the extended height.

In the second possible embodiment, the predetermined area includes at least one display page. The display module may include: a judging sub-module configured to determine whether a number of pieces of notice information that are already displayed on a current display page in the predetermined area is less than a predetermined number, the predetermined number being a maximum number of pieces of notice information that can by displayed on the current display page in the predetermined area; a second display sub-module configured to display the received notice information on the current display page in the predetermined area if it is determined that the number of pieces of notice information that are already displayed on the current display page in the predetermined area is less than the predetermined number; and a third display sub-module configured to refresh the position of a piece of the notice information having a longest display time on the current display page in the predetermined area to display the received notice information if it is determined that the number of pieces of notice information that are already displayed on the current display page in the predetermined area is not less than the predetermined number.

In the second possible embodiment, the apparatus may further include: a page turning signal receiving module configured to receive a page turning signal that instructs a page turning of the current display page in the predetermined area; and a page turning module configured to turn the displayed current display page in the predetermined area to another display page corresponding to the page turning signal.

In the second possible embodiment, the page turning module may include: a first page turning sub-module configured to turn the current display page in the predetermined area to the next display page when the page turning signal instructs to turn the current display page in the predetermined area to a next page and a next display page exists in the predetermined area; and a second page turning sub-module configured to turn the current display page in the predetermined area to the previous display page when the page turning signal instructs to turn the display page in the predetermined area to a previous display page and a previous display page in the predetermined area.

In a third embodiment of the invention, an electronic device including the apparatus of displaying the notice information that is provided with the second embodiment and its various preferred features.

An electronic device is provided according to a fourth embodiment of the invention. The device may comprise: one or more processors; a memory; and one or more modules stored in the memory and configured to be performed by the one or more processors, wherein the one or more modules are configured to perform the following functions: receiving notice information sent from an application program, the notice information including one or more operation elements provided by the application program; displaying the received notice information in a predetermined area, the predetermined area being an area displaying a status bar, or an area adjacent to the status bar, the status bar being arranged along an edge of a display.

The technical solution disclosed in the embodiments of the present disclosure can have an advantageous effect as following:

By displaying the notice information in the area adjacent to the status bar or the area displaying the status bar, it can solve the problem that the current method of displaying the current notice information has the impact on the current user operation. Displaying the notice information in the area displaying the status bar or the area adjacent to the status bar may not have an impact on other user operations, inasmuch as the status bar generally shows in the position located at the side edge of the electronic display. As a result, it may achieve a result which does not influence the user operation when informing the new notice information to users.

It should be understood that both the above general descriptions and the detailed description hereinafter are only for exemplary and illustrative purposes, rather than to limit the present disclosure.

### BRIEF DESCRIPTION OF THE DRAWINGS

Fig. 1 is a flowchart of a method for displaying notice information according to an embodiment of the disclosure.
Fig. 2 is a flowchart of a method for displaying notice information according to an embodiment of the disclosure.
Fig. 3A is a view of a predetermined area adjacent to the status bar according to an embodiment of the disclosure.
Fig. 3B is a view of an area displaying the status bar as the predetermined area according to an embodiment of the disclosure.
Fig. 4A is a view of enlarging the notice information according to an embodiment of the disclosure.
Fig. 4B is a view of enlarging the notice information according to an embodiment of the disclosure.
Fig. 4C is a view of enlarging the notice information according to an embodiment of the disclosure.
Fig. 5 is a view of hiding the notice information that has been displayed according to an embodiment of the disclosure.
Fig. 6 is a flow diagram of a method for displaying notice information according to an embodiment of the disclosure.
Fig. 7 is a view of displaying a plurality of the notice information on the current display page in the predetermined area according to an embodiment of the disclosure.
Fig. 8A is a view of turning the displayed current page to a next page in the predetermined area according to an embodiment of the disclosure.
Fig. 8B is a view of turning the displayed current page to a next page in the predetermined area according to an embodiment of the disclosure.
Fig. 8C is a view of turning the displayed current page to a previous page in the predetermined area according to an embodiment of the disclosure.
Fig. 8D is a view of turning the displayed current page to a previous page in the predetermined area according to an embodiment of the disclosure.
Fig. 9 is a block diagram of an apparatus for displaying the notice information according to an embodiment of the disclosure.
Fig. 10 is a block diagram of an apparatus for displaying the notice information according to an embodiment of the disclosure.
Fig. 11 is a block diagram of an electronic device according to an embodiment of the disclosure.

### DESCRIPTION OF THE EMBODIMENTS

Detailed description of the exemplary embodiments will be made herein, with examples thereof to be shown in drawings. In the following descriptions, when the drawings are referred to, unless expressed otherwise, the same number in different drawings refers to the same or similar elements. The embodiments described in the exemplary embodiments as below do not represent all embodiments that are consistent with the present disclosure. On the contrary, they are only examples of the devices and the methods that are consistent with some of the aspects of the present disclosure as recited in the claims.

The "electronic device" described in the present disclosure can be included but not limited to: intelligent phone , tablet computer, personal digital assistant (PDA), intelligent TV, E-book reader, moving picture experts group audio layer III (MP3 player), moving picture experts group audio layer IV (MP4 player), notebook and personal computer. The phrase "at least a" described in the present disclosure can indicate one, two or two more.

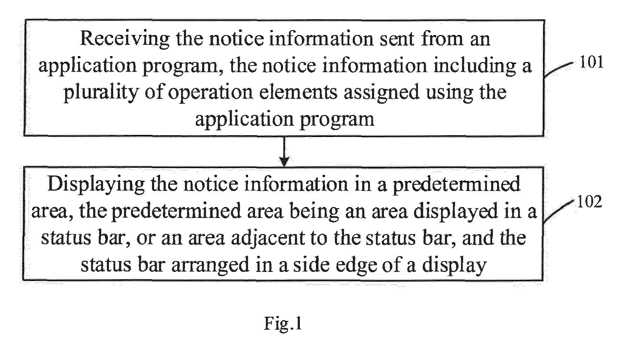

Referring to Fig. 1, it shows a flowchart of a method for displaying notice information according to an embodiment of the disclosure. The method of displaying the notice information can be applied to a variety of electronic devices such as intelligent phone, tablet computer, personal digital assistant (PDA), intelligent TV, E-book reader, moving picture experts group audio layer III (MP3 player), moving picture experts group audio layer IV (MP4 player), notebook, personal computer, etc. The method can include the steps as follows.

In the step 101, the notice information sent from an application program is received. The notice information includes one or more operation elements provided by the application program.

The operation elements may include a selection button and/or a text input box.

The application program may be a program installed in the electronic device such as the application program used for the phone communication, the application program used for receiving and sending messages, the address book, the notepad, or the browser, and the like.

The notice information is the information generated by the application program to notice a user. The notice information usually can include the text messages used to inform users to check information. In addition, when the users need continuous operations after checking the text messages, the application program also can designate several operation elements in the sent notice information such as a selection button and/or a text input box that can be provided to the user operations.

In the step 102, the notice information in a predetermined area is displayed. The predetermined area is an area displayed in a status bar, or an area adjacent to the status bar, and the status bar is arranged along an edge of a display.

Generally, the status bar displayed on the electronic device may be arranged in the side edge of the display. For instance, the status bar can be arranged in the top edge, the bottom edge, the left side edge, or the right side edge of the electronic device display. The status bar can display several current statuses of application programs such as battery power, system time and/or wireless signal. Moreover, the status bar can display icons used to represent the generation of the notice information in the application programs and corresponding to the application programs.

The predetermined area can be a rectangle area that is adjacent to the status bar in parallel. The predetermined area can also be a rectangular area displaying the status bar. Of course, the predetermined area can be other shapes which can be easy to think of. For example, it can be an ellipse, a polygon, etc.

In a first preferred embodiment, the method for displaying the notice information may further include: receiving operation information generated when an operation element displayed in the notice information is operated, and sending the operation information to an application program used to process the operation information. The application program implements a process according to the received operation information.

In a second preferred embodiment, the method for displaying the notice information may further include: deleting the displayed notice information after receiving the operation information generated when the operation elements displayed in the notice information are operated.

In a third preferred embodiment, the method for displaying the notice information may further include: receiving an unfolding instruction generated when implementing an unfolding operation for the displayed notice information, and displaying the unfolded notice information after receiving the unfolding instruction.

In a fourth preferred embodiment, the method for displaying the notice information may further include: receiving a hiding instruction that is an instruction generated when an operating position is not located in the predetermined area, and hiding the notice information that has been displayed.

In a fifth preferred embodiment, when the predetermined area is the area displaying the status bar, displaying the notice information in the predetermined area may include: determining a notice level corresponding to the notice information, the notice level used to indicate a rank of importance of the notice information, determining a display height of the notice information according to content and/or the notice level in the notice information, extending a display height of the status bar according to the display height of the notice information, and displaying the notice information in the status bar with the extended display height.

In a sixth preferred embodiment, the predetermined area may include at least one display page, and displaying the notice information in the predetermined area may include: judging whether the number of pieces of the notice information displayed on the current display page in the predetermined area is less than a predetermined number, the predetermined number being is a maximum for displaying the notice information on the current display page in the predetermined area, if it is determined that the number of pieces of the notice information displayed on the current display page in the predetermined area is less than the predetermined number, displaying the notice information on the current display page in the predetermined area, and if it is determined that the number of pieces of the notice information displayed on the current display page in the predetermined area is not less than the predetermined number, refreshing a display area displaying the piece of notice information that has a longest display time on the current display page, to display the received notice information.

In a seventh preferred embodiment, the method for displaying the notice information may further include: receiving a page turning signal that is configured to instruct a page turning of the current display page in the predetermined area, and turning the displayed current display page in the predetermined area to another display page corresponding to the page turning signal.

In an eighth possible embodiment, turning the displayed current display page in the predetermined area to another display page corresponding to the page turning signal may include: turning, when the page turning signal instructs to turn the display page in the predetermined area to a next page and a next display page exists in the predetermined area, the current display page in the predetermined area to the next display page; and turning, when the page turning signal instructs to turn the display page in the predetermined area to a previous page and a previous display page exists in the predetermined area, the current display page to the previous display page in the predetermined area.

In summary, the embodiments of the present disclosure provide method for displaying notice information. By displaying the notice information in the area adjacent to the status bar or the area displaying the status bar, the method can solve the problem that the current method of displaying the notice information has the impact on the current user operation. Displaying the notice information in the area displaying the status bar or the area adjacent to the status bar may not have an impact on other user operations, inasmuch as the status bar generally shows in the position located at the side edge of the electronic display. As a result, it may achieve a result which does not influence the user operation when informing the new notice information to users.

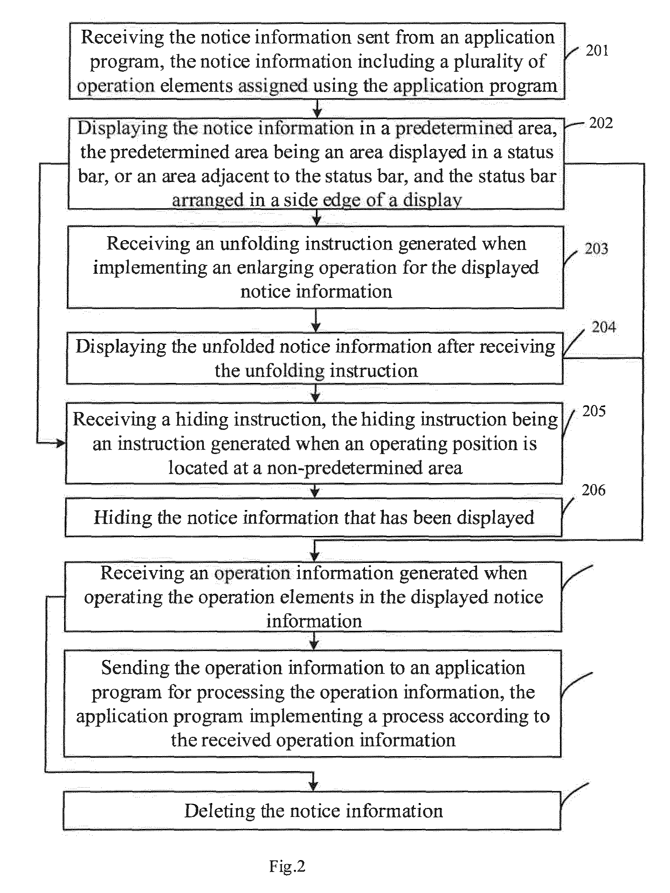

After receiving the notice information and displaying it in the predetermined area, the users, in accordance with the contents related to the displayed notice information that needs to be selected for operating, can implement other operations, or they can ignore the notice information to implement other operations. The procedure is shown as following steps illustrated in Fig. 2.

Referring to Fig. 2, it shows another flowchart of a method for displaying notice information according to an embodiment of the disclosure. The method of displaying the notice information can be applied to a variety of electronic devices such as intelligent phone, tablet computer, personal digital assistant (PDA), intelligent TV, E-book reader, moving picture experts group audio layer III (MP3 player), moving picture experts group audio layer IV (MP4 player), notebook, personal computer, etc. The method can include the steps as follows.

In the step 201, the notice information sent from an application program is received. The notice information includes one or more operation elements provided by the application program.

The operation elements may include a selection button and/or a text input box.

The application program may be a program installed in the electronic device such as an application program for telephone communication, the application program for receiving and sending messages, the address book, the notepad, or the browser and the like.

The notice information is the information provided by the application program to notice a user. The notice information usually can include the text messages used to inform the user to check information. In addition, when the user needs continuous operations after checking the text messages, the application program also can designate one or more operation elements in the sent notice information such as a selection buttons and/or a text input box provided for the user's operations.

Based on different application programs, the notice information may include other contents related to the application programs. For example, when the application program is the application program for the phone communication, the notice information can include not only selection buttons, but the characteristic contents used to display the selection buttons in different colors. These characteristic contents, for instance, can be used to display a select button in red that represents the function of hanging up the phone. Or, a select button displayed in green means that a phone call can be picked up by selecting the green button. As another example, the notice information can include voice prompt information, to inform the speaker of the electronic device to implement the corresponding voice prompt when the status bar receives the notice information.

In the step 202, the notice information in a predetermined area is displayed. The predetermined area is an area displaying the status bar, or an area adjacent to the status bar, and the status bar is arranged in a side edge of a display.

Generally, the status bar displayed on the electronic device may be arranged in the side edge of the display. For instance, the status bar can be arranged in the top edge, the bottom edge, the left side edge, or the right side edge of the electronic device display. The status bar can display current statuses of application programs such as a battery power, a system time and/or a wireless signal. Moreover, the status bar can display icons representing the generation of the notice information provided by application programs and corresponding to the application programs.

The predetermined area generally may be a small area. This could prevent affecting the user's operation on other content displayed on the display when the notice information is displayed in the predetermined area. The predetermined area can be a rectangle area that is adjacent to the status bar in parallel. It also can be a rectangle area displaying the status bar. The predetermined area can also be of other shapes, such as a circle, an ellipse, a polygon, etc.

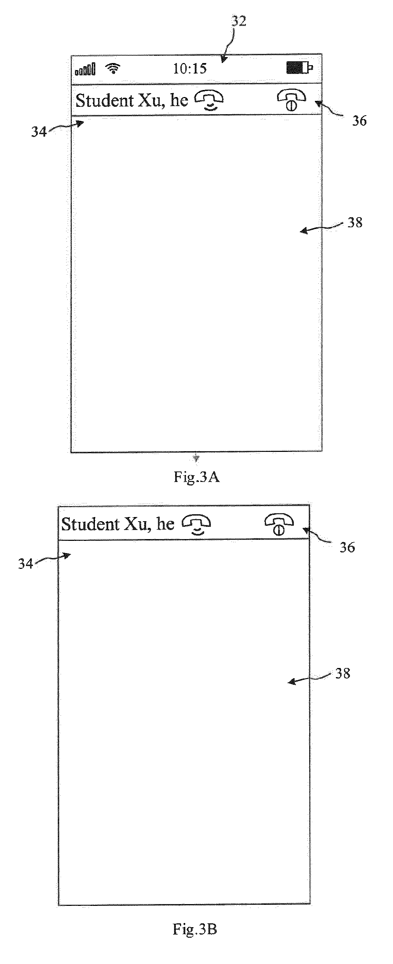

Referring to Fig 3A, it shows a view of a predetermined area adjacent to a status bar according to an embodiment of the disclosure. The status bar 32 is arranged along the top edge of the display screen 38. The predetermined area 34 is located under the status bar 32 and adjoins with the status bar 32. Notice information 36 is displayed in the predetermined area 34. Inasmuch as the status bar 32 is arranged along the top edge of the display screen 38 and the predetermined area 34 is small, the notice information 36 has a less impact on the contents displayed on the display screen 38.

Referring to Fig. 3B, it shows a view of an area displaying the status bar as a predetermined area according to an embodiment of the disclosure. The status bar 32 is arranged along the top edge of the display screen 38. The notice information 36 can be displayed in the status bar 32 after the status bar 32 is arranged as the predetermined area 34.

In the actual implementation, because the status bar may have a small display area, when displaying the notice information in the area, it can appropriately extend the display height of the status bar. The procedure of displaying the notice information in the status bar display area may include steps as following.

In the step s1, a notice level corresponding to the notice information is determined, the notice level being used to indicate a rank of importance of the notice information.

The notice level can be set by the system, or by the user according to a need. For example, when the user thinks that an incoming call is more important, the notice level of call notice information is set to be high. Also, when the user thinks that a short message is not important, the notice level of notice information for an unread short message is set to be low.

In the step s2, a display height of the notice information is determined according to content and/or the notice level of the notice information.

For example, the display height of the notice information displayed can be determined according to a length of a text message, a number of selection buttons, etc. In a possible embodiment, when the predetermined area displays only one piece of notice information, the width of notice information usually can be arranged the same as a width of display.

For another example, the display height of the notice information displayed can be determined based on the notice level of the notice information. The notice information that has a higher notice level may have a higher display height to increase the user concern.

For another example, the display height of the notice information displayed can be determined based on the length of the text message, the number of selection buttons, etc., and/or the notice level of the notice information. The notice information that has a higher notice level may be arranged to have a higher display height. Moreover, there has a slight adjustment for the display height of notice information according to the length of the text message, the number of selection buttons, etc.

In the step s3, a display height of the status bar is extended according to the display height of the notice information;

For example, when the status bar needs to display only one piece of notice information, the display height of the status bar can be extended according to the display height of the notice information. Moreover, for example, when the status bar has sequentially displayed at least one piece of notice information along a direction corresponding to the display height of the status bar, the display height of the status bar also can be extended according to the display height of the notice information, In addition, for example, when the status bar has sequentially displayed at least one piece of notice information along a direction corresponding to the display width of the status bar, if the display height of the received notice information is greater than the maximum display height of the status bar displaying the notice information, the display height of the status bar can be extended to the same as the display height of the received notice information. If the display height of the received notice information is less than the maximum display height of the status bar displaying the notice information, there is no extension of the display height of the status bar.

In the step s4, the notice information in the status bar with the extended height is displayed. The displayed status bar is shown in Fig. 3B, that is, there has the status bar whose display height has been extended. There is one piece of notice information displayed in the status bar.

It should be noted that the predetermined area that has the larger display height of the notice information may have more covers on the display to provide users to operate other contents. To reduce the cover area of notice information in the predetermined area shown on the display, it generally set the display height of the generated notice information to be less than a threshold value. At this time, when there are more contents of the notice information, and the display height of the notice information needs to be limited less than the threshold value, it can show a part of notice information contents in the predetermined area having the display height corresponding to the predetermined threshold value of the notice information. Therefore, the user usually can infer the type of the notice information according to the part of contents. For instance, whether the notice information is a spam message, a call notice, or an upgrade notice for certain application program.

In a possible embodiment, when all of the contents included in the notice information cannot be displayed one-time because of display height of the notice information limited by the predetermined threshold value. More contents can be shown by scrolling the scroll bar positioned in the direction corresponding to the display height of the notice information or the display width of the notice information.

Usually, in order to prevent the impact on the current user operations, the predetermined area generally may be arranged to be small. Correspondingly, the notice information shown in the predetermined area also may be small. If the user checks the notice information and need to implement an operation on the notice information, the user can choose to enlarge the notice information to implement the operation to the unfolded notice information. Therefore, before the operation on the notice information, the method of displaying the notice information may further include the step 203 and step 204.

In the step 203, an unfolding instruction is generated when an unfolding operation on the notice information is received.

The unfolding operation can be a pressing operation of pressing the notice information for at least a predetermined time period, a click operation of clicking the notice information continuously at least twice, or a sliding operation of sliding the notice information downward.

The unfolding instruction is generated when the unfolding operation on the notice information is implemented. It means the user needs to check or operate on content of the notice information. Correspondingly the status bar receives the unfolding instruction.

In the step 204, the unfolded notice information is displayed after receiving the unfolding instruction.

In the actual implementation, it can determine the manner of unfolding the notice information in accordance with the content included in the notice information. There may include three statuses.

In the first status, when there is less content in the notice information, all of the content is displayed in the predetermined area. Nevertheless, because the notice information is initially displayed small, not easy for the user operation after receiving the unfolding instruction, the notice information may be enlarged directly, and then the enlarged notice information can be displayed.

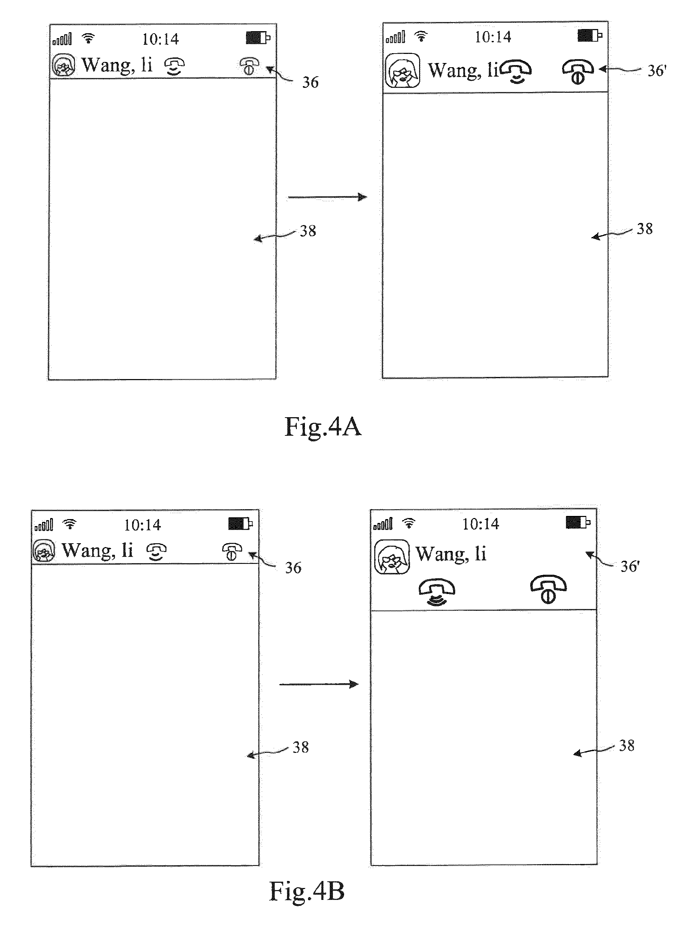

For example, referring to Fig. 4A, it shows a view of enlarging the notice information according to an embodiment of the disclosure. There is an illustration of the predetermined area which is the area displaying the status bar. In Fig. 4A, before receiving the unfolding instruction, all of the content included in the notice information 36 is displayed in the predetermined area 34. After receiving the unfolding instruction, the notice information 36 can be enlarged directly to be the notice information 36' having an appropriate display size. In other words, the display height of the notice information is enlarged. At this time, text messages and operation elements in the enlarged notice information 36 are enlarged the same as an enlargement scale of the notice information 36.

In the second status, when there is less content in the notice information, all of the content is displayed in the predetermined area. Nevertheless, because the notice information is initially displayed small, not easy for the user operation, after receiving the unfolding instruction, to more correspond to the user operation habits, it can be enlarged the notice information and rearranged it, and then the notice information which are enlarged and rearranged can be displayed. Because the notice information has the smaller size before it is unfolded, to enable to show more contents, the arrangement of the content displayed in the notice information usually is not aesthetic and not matching with the user operation habits. When enlarging the notice information, the notice information can be rearranged to assure a configuration of the content displayed in the unfolded notice information having an arrangement of aesthetics and corresponding to the user operation habits.

For instance, referring to Fig. 4B, it illustrates a view of unfolding the notice information according to an embodiment of the disclosure. There is an illustration of the predetermined area which is the area displaying the status bar. In Fig. 4B, inasmuch as all of the content included in the notice information 36 is displayed in the predetermined area 34 before receiving the unfolding instruction. The content in the notice information 36 for the convenience of the user operation can be rearranged and the unfolded notice information 36' that have been rearranged can be displayed finally after receiving the unfolding instruction.

In the third status, when there is more content in the notice information, all of the content may not be displayed in the predetermined area at the same time. After the unfolding instruction is received, the notice information can be unfolded. For instance, more content can be displayed in the unfolded notice information. Alternatively and/or additionally" the content originally displayed in the notice information can be rearranged, and then the unfolded notice information can be displayed.

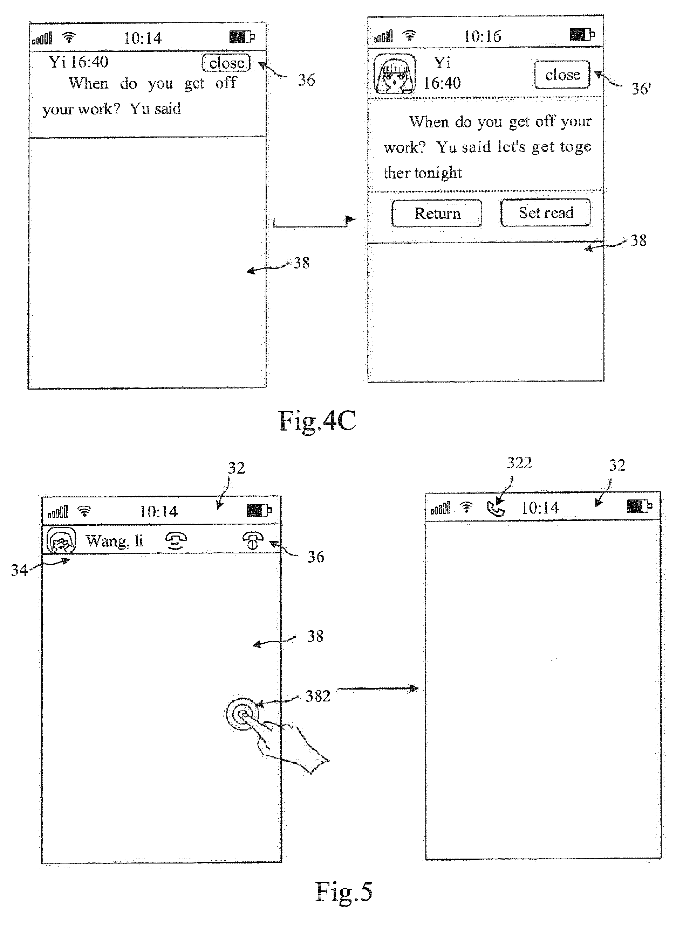

For instance, referring to Fig. 4C, it illustrates a view of unfolding the notice information according to an embodiment of the disclosure. There is an illustration of the predetermined area which is an area adjacent to the status bar shown in Fig. 4C. In Fig. 4C, not all of content included in the notice information 36 is displayed in the predetermined area 34, such as a text message or all of operation elements. After the unfolding instruction is received, the notice information 36 may be unfolded to the appropriate display size. Because the unfolded notice information 36' may need to display more content that have not been displayed before the notice information is unfolded, the enlargement scale of text messages and operation elements in the notice information 36 generally is less than the enlargement scale of the notice information 36. Due to the display size of the notice information 36 becoming larger, the content in unfolded notice information 36' can be rearranged for the convenience of the user operation.

It should be noted that in Fig. 4A to Fig. 4C. the unfolded notice information can be unfolded or enlarged to a predetermined display size. The predetermined display size generally is less than the size of display screen 38. For instance, the unfolded notice information 36' can be unfolded or enlarged to the predetermined display height which generally is less than the display height of display screen 38. Accordingly, the user, who wants to perform another operation on content other than the notice information, may do so on an area outside where the notice information is displayed on the display 38. It is can be seen that the predetermined display size can also be the same as the display size of display screen 38. After the user completes the operation on the notice information, the notice information is deleted. At this time, the user can carry on the operations by returning to the original interface.

After the user checks the notice information illustrated in step 202, or the unfolded notice information illustrated in the step 204, the notice information can be chosen to ignore when the user think there are no requirements for operating the notice information temporarily. The notice information that has been displayed can be hidden temporarily for reducing an impact on the user operations.

In the step 205, a hiding instruction is generated when an operating position of the user's operation is located beyond the predetermined area.

For instance, when the operating position is not located in the predetermined area, the hiding instruction can be received.

In the step 206, the notice information that has been displayed is hidden.

When the operating position is not located in the predetermined area, this means that the user won't operate the content in the notice information temporarily, the notice information that has been displayed therefore may be hidden at this time. As shown in Fig. 5, it shows a view of hiding the notice information that has been displayed according to an embodiment of the disclosure. In Fig. 5, notice information 36 has been displayed in the predetermined area 34 adjacent to the status bar 32. When the user operates a certain position 382 of a non-predetermined area on the display screen 38, there has an implementation of hiding the notice information 36. Moreover, for example, when the notice information has been displayed in the status bar 32 as the predetermined area 34 and the user operation is not positioned in the predetermined area 34, the notice information displayed in the status bar 32 can be hidden. Generally, after the notice information 36 is hidden, to reminder the existing notice information to the user, the icons corresponding to the notice information can be shown in the status bar 32 such as a missed call icon 322 shown in Fig. 5.

In a possible embodiment, the user may need to hide the status bar when playing the games. If the notice information is displayed in the status bar, when the status bar is hidden, the notice information is hidden simultaneously.

After the user checks the notice information illustrated in step 202, or the unfolded notice information illustrated in the step 204, if the user thinks that there is a need to operate the notice information, the user can perform an operation on an operation element included in the notice information. That is, the user can perform an operation directly on an operation element in the notice information displayed in the step 202. Also, the user can perform an operation element in the unfolded notice information displayed in the step 204.

In the step 207, operation information is generated when an operation is performed on the operation element in the displayed notice information.

For instance, when the application program for the phone communication sends the calling notice information to the status bar, operation elements in the notice information displayed in the status bar can usually include an answer key and a hang up key. When the user selects the answer key or the hang up key, the operation information corresponding to the selected key is generated.

In the step 208, the operation information is sent to the application program for processing. The application program implements a process according to the received operation information.

After the application program receives the operation information, it can implement the process in the back stage without switching the displayed interface to the interface associated with the application program.

In the step 209, the notice information is deleted.

Generally, after receiving the operation information generated when the operation elements displayed in the notice information are operated, inasmuch as the generated operation information also can be sent to the application program, the application program can process the operation information directly in the back stage, namely the notice information has been processed. At this time, the notice information need not be displayed continuously, therefore, it can be deleted.

It should also be noted that the step 205 can be performed directly following the step 202, or following the step 204. The step 207 can be performed directly following the step 202 or following the step 204.

In summary, the embodiments of the present disclosure provide a method for displaying notice information. By displaying the notice information in the area adjacent to the status bar or the area displaying the status bar, the method can solve the problem that the current method of displaying the notice information has the impact on the current user operation. Displaying the notice information in the area displaying the status bar or the area adjacent to the status bar may not have an impact on other user operations, inasmuch as the status bar generally shows in the position located at the side edge of the electronic display. As a result, it may achieve a result which does not influence the user operation when informing the new notice information to users.

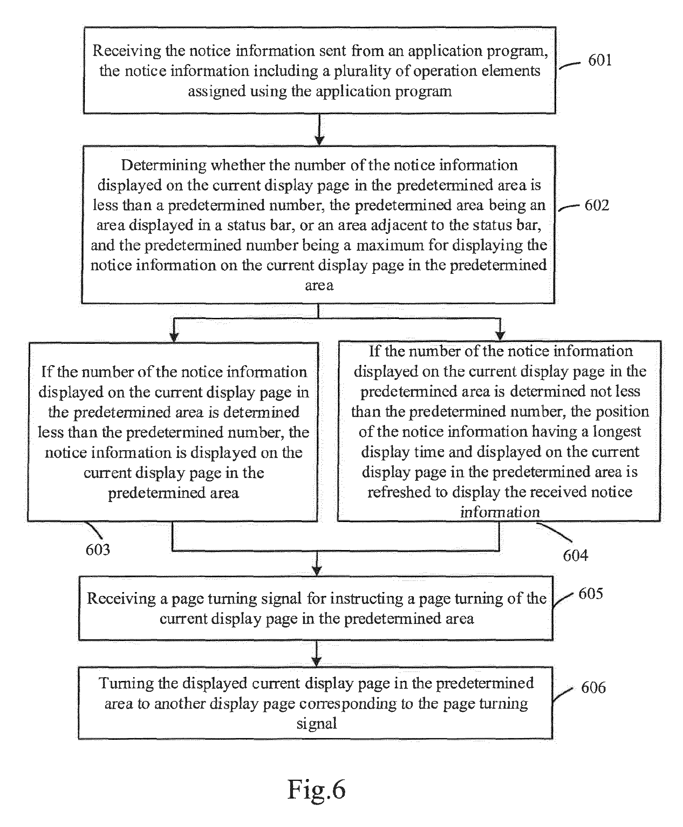

In the actual implementation, when the status bar receives a new piece of notice information, and a piece of old notice information has been displayed in the predetermined area adjacent to the status bar or in the status bar. At this time, the old notice information in the predetermined area that has been displayed can be replaced by the piece of new notice information. In other words, the last received notice information is always displayed in the predetermined area. When the cellphone is not checked by the user for a time period in which, the status bar continuously receives a lot of notice information, this display method may cause the user to miss to check the notice information received earlier. Therefore, this problem may be solved using a better method for displaying the notice information. The steps described are as illustrated in Fig. 6.

Referring to Fig. 6, it shows a flow diagram of a method for displaying notice information according to an embodiment of the disclosure. The method of displaying the notice information can be applied to a variety of electronic devices such as intelligent phone, tablet computer, personal digital assistant (PDA), intelligent TV, E-book reader, moving picture experts group audio layer III (MP3 player), moving picture experts group audio layer IV (MP4 player), notebook, personal computer, etc. The method can comprise the steps as follows.

In the step 601, the notice information sent from an application program is received. The notice information includes one or more operation elements provided by the application program.

The operation elements may include a selection button and/or a text input box.

In the step 602, it is determined whether a number of the notice information that are already displayed on a current display page in the predetermined area is less than a predetermined number. The predetermined area can be the area displaying the status bar, or the area adjacent to the status bar. The predetermined number is a maximum number of pieces of notice information that can be displayed on the current display page in the predetermined area.

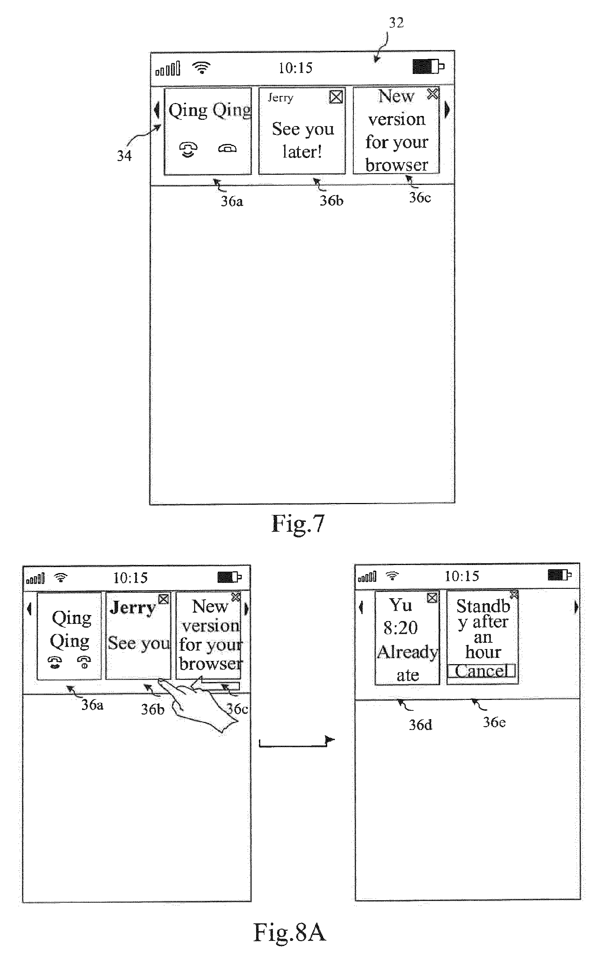

In the actual implementation, when multiple pieces of notice information need to be displayed, multiple display pages can be arranged in the status bar display area, or the area adjacent to the status bar. One page is displayed each time, and each page can display at least one piece of the notice information. Generally, a maximum number of pieces of notice information that can be displayed on each display page may be set to be the same. As illustrated in Fig. 7, it shows a view of displaying a plurality of pieces of notice information on a current display page in the predetermined area according to an embodiment of the disclosure. As shown in Fig. 7, there are three pieces of notice information 36a, 36b, and 36c displayed in the area adjacent to the status bar.

In the step 603, if it is determined that the number of pieces notice information displayed on the current display page in the predetermined area is less than the predetermined number, the notice information is displayed on the current display page of the predetermined area.

For instance, if two pieces of notice information have been displayed on the current display page of the predetermined area, and if the maximum number of pieces of notice information that can be displayed in the current display page is greater than two, more notice information also can be displayed in the current display page.

In the step 604, if it is determined that the number of pieces of notice information displayed on the current display page in the predetermined area is not less than the predetermined number, the position of a piece of the notice information having a longest display time on the current display page in the predetermined area may be refreshed to display the received notice information.

When the status bar includes multiple pieces of notice information, in some cases, the user may think that all of the notice information is not important and does not need to be processed temporarily. Suppose the last received notice information may be regarded as the information that is more important and needs to be processed immediately by the user, in order to ensure that the user can check the notice information on the current display page of the predetermined area, the position of a piece of notice information having a longest display time and displayed on the current display page of the predetermined area needs to be refreshed to display the received notice information.

In the step 605, a page turning signal is received to instruct a page turning of the current display page in the predetermined area. The turning page signal is a signal which is generated by sliding touch in accordance with the predetermined track on the current display page in the predetermined area, or by selecting the page turning button that is arranged on the current display page of the predetermined area.

When the status bar sequentially displays more pieces of notice information according to a direction corresponding to a display width of the status bar, the predetermined track can be a sliding touch from the right side to the left side, or an opposite sliding touch thereto. When the status bar sequentially displays more pieces of notice information according to the direction corresponding to the display height of the status bar, the predetermined track can be a sliding touch from the top side to the down side, or an opposite sliding touch thereto. The page turning button can be a button for instructing to turn the current display page to a previous display page, or to turn the current display page to a next display page.

In the step 606,the current display page in the predetermined area is turned to another display page corresponding to the page turning signal.

There are two statuses illustrating the implementation of turning the current display page displayed in the predetermine area.

In the first status, when the page turning signal is used to instruct the current display page in the predetermined area to turn to the next page and the next page exists in the predetermined area, the current display page is turned to the next page in the predetermined area.

For instance, as illustrated in Fig. 8A, it shows a view of turning the displayed current page to a next page in the predetermined area according to an embodiment of the disclosure. The embodiment shown in Fig. 8A illustrates the placement of multiple pieces of notice information arranged sequentially based on the direction corresponding to the display width of the status bar. When the user touches the current display page in the predetermined area 34 by sliding from the right side to the left side, the page turning signal is generated to instruct to turn the current display page in the predetermined area to the next page. If the next display page exists in the predetermined area at this time, the current display page displayed in the predetermined area is turned to the next page. Referring to Fig. 8A, before turning the current page to the next page, the notice information 36a, 36b and 36c are displayed on the current display page. After the current page is turned to the next page, the predetermined area displays the notice information including the notice information 36d, 36e.

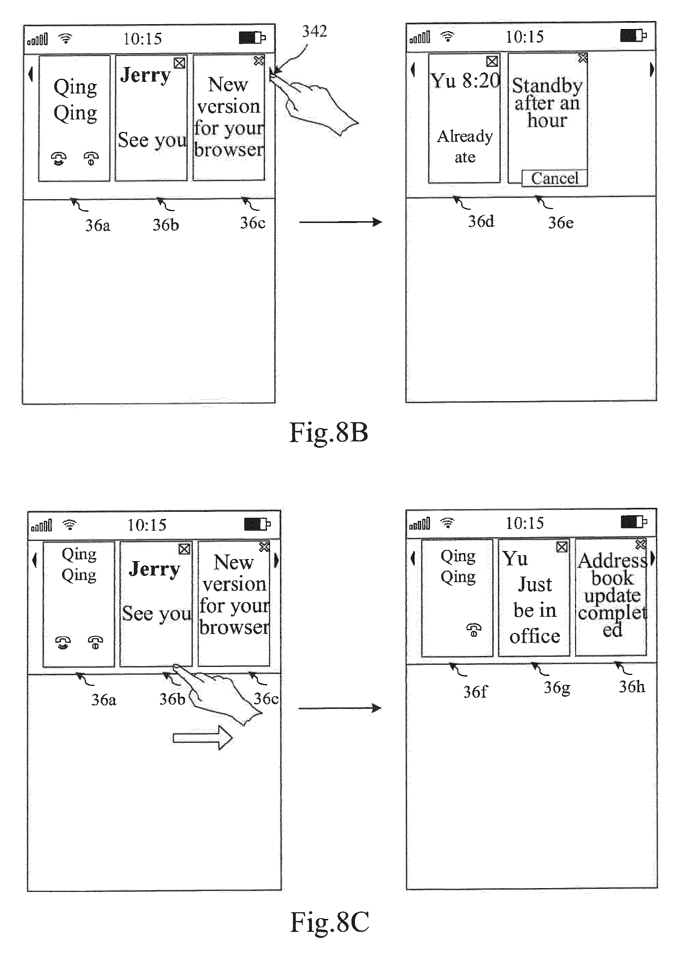

Moreover, for example, referring to Fig. 8B, it shows a view of turning the current display page to a next page in the predetermined area according to another embodiment of the disclosure. The embodiment shown in Fig. 8B illustrates the placement of multiple pieces of notice information arranged sequentially based on the direction corresponding to the display width of the status bar. When the user selects a button 342 arranged on the current display page in the predetermined area, the turning page signal is generated to instruct to turn the current display page in the predetermined area to the next page. If the next display page exists in the predetermined area at this time, the current display page displayed in the predetermined area is turned to the next page. Referring to Fig. 8B, before turning the current page to the next page, the notice information 36a, 36b and 36c are displayed on the current display page. After the current page is turned to the next page, the notice information displayed in the predetermined area includes notice information 36d, 36e.

In the second status, when the page turning signal is used to instruct to turn the current display page in the predetermined area to the previous page and the previous page exists in the predetermined area, the current display page is turned to the previous page in the predetermined area.

As illustrated in Fig. 8C, it shows a view of turning the current display page to the previous page in the predetermined area according to an embodiment of the disclosure. The embodiment shown in Fig. 8C illustrates the placement of multiple pieces of notice information arranged sequentially based on the direction corresponding to the display width of the status bar. When the user touches the current display page in the predetermined area by sliding from the left side to the right side, the page turning signal is generated to instruct to turn the current display page in the predetermined area 34 to the previous page. If the previous display page exists in the predetermined area at this time, the current display page displayed in the predetermined area is turned to the previous page. Referring to Fig. 8C, before turning the current display page to the previous page, the notice information 36a, 36b and 36c are displayed on the current display page. After the current display page is turned to the previous page, the notice information displayed in the predetermined area includes notice information 36f, 36g and 36h.

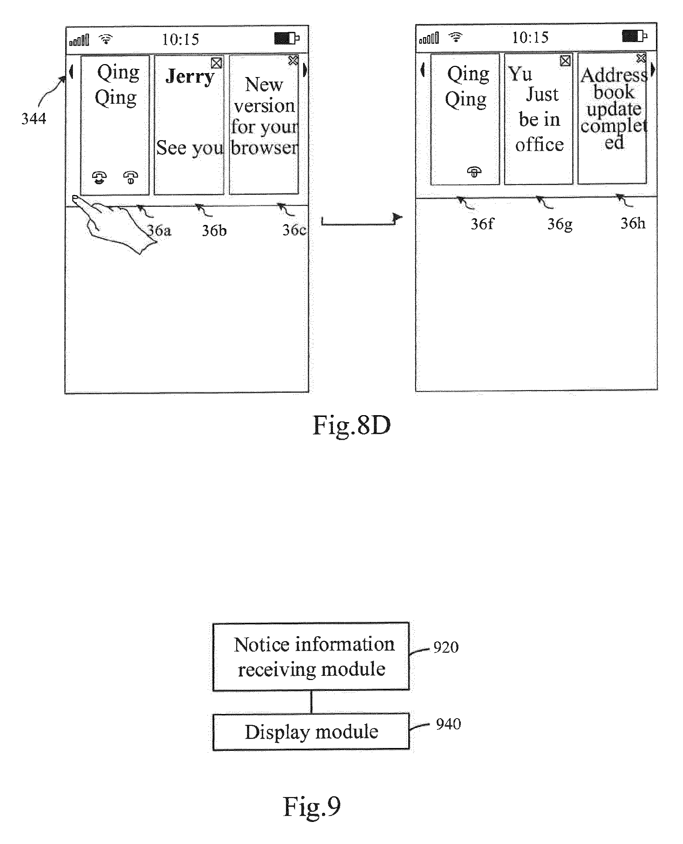

Moreover, for example, referring to Fig. 8D, it shows a view of turning the current display page to the previous page in the predetermined area according to another embodiment of the disclosure. The embodiment shown in Fig. 8D illustrates the placement of multiple pieces of notice information arranged sequentially based on the direction corresponding to the display width of the status bar. When the user selects the button 344 arranged on the current display page in the predetermined area, the page turning signal is generated to instruct to turn the current display page in the predetermined area to the previous page. If the previous display page exists in the predetermined area at this time, the current display page displayed in the predetermined area is turned to the previous page. Referring to Fig. 8D, before turning the current display page to the previous page, the notice information 36a, 36b and 36c are displayed on the current display page. After the current page is turned to the previous page, the notice information displayed in the predetermined area includes notice information 36f, 36g and 36h.

It should be noted that when the current display page shows multiple pieces of notice information, the size of each piece of notice information may be small. When the user needs to perform an operation on one of the pieces of notice information displayed on the current display page, the user can implement the unfolding operation for the one of the pieces of notice information, and then the operation information is generated by operating the operation elements in the unfolded notice information. Moreover, the operation information is sent to the application program corresponding to the one piece of notice information. The operation information is processed using the application program. After the operation information is generated, the unfolded notice information and an icon corresponding to the one piece of notice information may be deleted.

It should also be noted that, when the user performs an operation on content other than that displayed in the predetermined area, all of these pieces of notice information in the predetermined area can be hidden at this time. Moreover, icons corresponding to these pieces of notice information cannot be shown in the status bar. The icons are, for instance, a missed call icon, a system upgrade icon, an unread message icon, etc.

In summary, the embodiments of the present disclosure provide a method for displaying notice information. By displaying the notice information in the area displaying the status bar and the area adjacent to the status bar at the same time, the method can solve the problem about the user who may miss the important notice information that is received earlier when the predetermined area only displays the notice information corresponding to the last received notice information. It may achieve a result of displaying more notice information at the same time to greatly prevent an impact on the user missing the important notice information.

In a possible embodiment, a priority level of the received notice information can be determined in accordance with a corresponding relation between application programs and priority levels, and the different reminders can be set for these pieces of notice information corresponding to these application programs with different priority levels. For example, different colors can be set for the texts corresponding to these pieces of notice information with different priority levels. Moreover, different voice prompts can be implemented in displaying these pieces of notice information with different priority levels.

In another embodiment, a priority level of the received notice information can be determined in accordance with a corresponding relation between application programs and priority levels, and these pieces of notice information can be displayed following the order of the priority levels.

In yet another embodiment, a corresponding voice of a received notice information can be determined in accordance with a corresponding relation between the application programs and arranged voice prompts, and the user is prompted according to the determined voice.

Referring to Fig. 9, it shows a block diagram of an apparatus for displaying the notice information according to an embodiment of the disclosure. The apparatus for displaying notice information can be applied to a variety of electronic devices such as intelligent phone, tablet computer, personal digital assistant (PDA), intelligent TV, E-book reader, moving picture experts group audio layer III (MP3 player), moving picture experts group audio layer IV (MP4 player), notebook, personal computer, etc. The apparatus may include a notice information receiving module 920 and a display module 940.

The notice information receiving module 920 is configured to receive notice information sent from an application program. The notice information may include a one or more operation elements provided by the application program.

In a possible implementing manner, the operation elements may include a selection button and/or a text input box.

The display module 940 is configured to display the notice information which the notice information receiving module 920 receives in a predetermined area. The predetermined area can be an area displaying a status bar, or an area adjacent to the status bar, and the status bar may be arranged along an edge of a display.

In summary, the embodiments of the present disclosure provide an apparatus for displaying notice information. By displaying the notice information in the area adjacent to the status bar or the area displaying the status bar, the method can solve the problem that the method of displaying the current notice information has the impact on the current user operation. Displaying the notice information in the area displaying the status bar or the area adjacent to the status bar may not have an impact on other user operations, inasmuch as the status bar generally shows in the position located at the side edge of the electronic display. As a result, it may achieve a result which does not influence the user operation when informing the new notice information to the user.

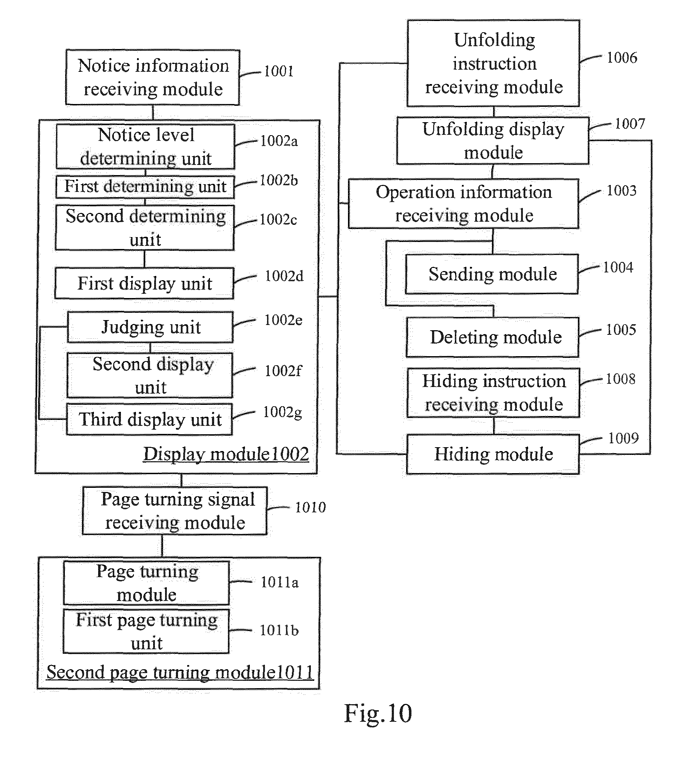

Referring to Fig. 10, it shows a block diagram of an apparatus for displaying the notice information according to another embodiment of the disclosure. The apparatus for displaying notice information can be applied to a variety of electronic devices such as intelligent phone, tablet computer, personal digital assistant (PDA), intelligent TV, E-book reader, moving picture experts group audio layer III (MP3 player), moving picture experts group audio layer IV (MP4 player), notebook, personal computer, etc. The apparatus may include a notice information receiving module 1001 and a display module 1002.

The notice information receiving module 1001 is configured to receive a notice information sent from an application program. The notice information may include a one or more operation elements provided by the application program.

In a possible implementing manner, the operation elements may include a selection buttons and/or a text input box.

The display module 1002 is configured to display the notice information which the notice information receiving module 1001 receives in a predetermined area. The predetermined area may be an area displaying a status bar, or an area adjacent to the status bar, and the status bar may be arranged along an edge of a display.

In the first possible implementing manner of the embodiment, the apparatus for displaying the notice information may further include an operation information receiving module 1003 and a sending module 1004.

The operation information receiving module 1003 is configured to receive the operation information that is generated when an operation element displayed in the notice information is operated.

The sending module 1004 is configured to send the operation information which the operation information receiving module 1003 receives to an application program for processing the operation information. The application program implements a process according to the received operation information.

In the second possible implementing manner of the embodiment, the apparatus for displaying the notice information may further include a deleting module 1005.

The deleting module 1005 is configured to delete the displayed notice information after the operation receiving module 1003 receives the operation information that is generated when the operation elements in the notice information displayed in the display module 1002 are operated.

In the third possible implementing manner of the embodiment, the apparatus for displaying the notice information may further include an unfolding instruction receiving module 1006 and an unfolding display module 1007.

The unfolding instruction receiving module 1006 is configured to receive an unfolding instruction generated when an unfolding operation on the displayed notice information is implemented. The notice information is displayed by the display module 1002.

The unfolding display module 1007 is configured to display the unfolded notice information after the unfolding instruction receiving module 1006 receives the unfolding instruction.

In a possible implementing manner, the operation information receiving module 1003 further receives the operation information generated when an operation element in the unfolded notice information is operated. The unfolded notice information is displayed by the unfolding display module 1007 are operated.

In the fourth possible implementing manner of the embodiment, the apparatus for displaying the notice information may further include a hiding instruction receiving module 1008 and a hiding module 1009.

The hiding instruction receiving module 1008 is configured to receive a hiding instruction. The hiding instruction is an instruction generated when an operating position is not located in the predetermined area.

The hiding module1009 is configured to hide the notice information that has been displayed using the display module 1002, or the unfolded notice information that has been displayed using the unfolding display module 1007.

In the fifth possible implementing manner of the embodiment, when the predetermined area is the area displaying the status bar, the display module 1002 may include a notice level determining sub-module 1002a, a first determining sub-module 1002b, a second determining sub-module 1002c and a first display sub-module 1002d.

The notice level determining sub-module 1002a is configured to determine a notice level corresponding to the notice information. The notice level indicates a rank of importance of the notice information.

The first determining sub-module 1002b is configured to determine a display height of the notice information according to content and/or the notice level of the notice information.

The second determining sub-module 1002c is configured to extend a display height of the status bar according to the display height of the notice information.

The first display sub-module 1002d is configured to display the notice information in the status bar with the extended display height.

In the sixth possible implementing manner of the embodiment, the predetermined area may include at least one display page, and the display module 1002 may include a judging sub-module 1002e, a second display sub-module 1002f, and a third display sub-module 1002g.

The judging sub-module 1002e is configured to judge whether a number of pieces of notice information displayed on a current display page in the predetermined area is less than a predetermined number. The predetermined number is a maximum number of pieces of notice information that can be displayed on the current display page in the predetermined area;

The second display sub-module 1002f is configured to display the notice information on the current display page in the predetermined area when it is determined that the number of pieces of notice information displayed on the current display page in the predetermined area is less than the predetermined number.

The third display sub-module 1002g is configured to refresh the position of a piece of notice information having a longest display time and displayed on the current display page in the predetermined area, to display the newly received notice information, when it is determined that the number of pieces of notice information displayed on the current display page in the predetermined area is not less than the predetermined number.

In the seventh possible implementing manner of the embodiment, the apparatus for displaying the notice information may further include a page turning signal receiving module1010 and a page turning module 1011.

The page turning signal receiving module 1010 is configured to receive a page turning signal that instructs a page turning of the current display page in the predetermined area.

The page turning module 1011 is configured to turn the displayed current display page in the predetermined area to another display page corresponding to the page turning signal.

In the seventh possible implementing manner of the embodiment, the page turning module 1011 may further include a first page turning sub-module 1011a and a second page turning sub-module 1011b.

The first page turning sub-module 1011a is configured to turn the displayed current display page in the predetermined area to the next display page when the page turning signal instructs to turn the current display page in the predetermined area to a next page and a next display page exists in the predetermined area.

The second page turning sub-module 1011b is configured to turn the current display page in the predetermined area to the previous display page when the page turning signal instructs to turn the displayed page in the predetermined area to a previous page and a previous display page exists in the predetermined area.

In summary, the embodiments of the present disclosure provide an apparatus for displaying notice information. By displaying the notice information in the area adjacent to the status bar or the area displaying the status bar, the apparatus can solve the problem that the apparatus of displaying the current notice information has the impaction the current user operation. Displaying the notice information in the area displaying the status bar or the area adjacent to the status bar may not have an impact on other user operations, inasmuch as the status bar generally shows in the position located at the side edge of the electronic display. As a result, it may achieve a result which does not influence the user operation when informing the new notice information to the user.

It should be understood that the apparatus for displaying the notice information described by above embodiments is illustrated only based on a definition of the above function modules. In the actual implementation, the above functions can be completed depending on the requirements by some function modules which are assigned the above functions and different from the above function modules. That is, the internal configuration of the electronic device can be divided into different function modules to complete all of functions or the part of functions described above. Furthermore, the apparatus for displaying the notice information described by above embodiments belong to the same conception as the method for displaying the notice information, so the details of the apparatus are illustrated with reference to the above embodiments of the method. It is no more tautology here.

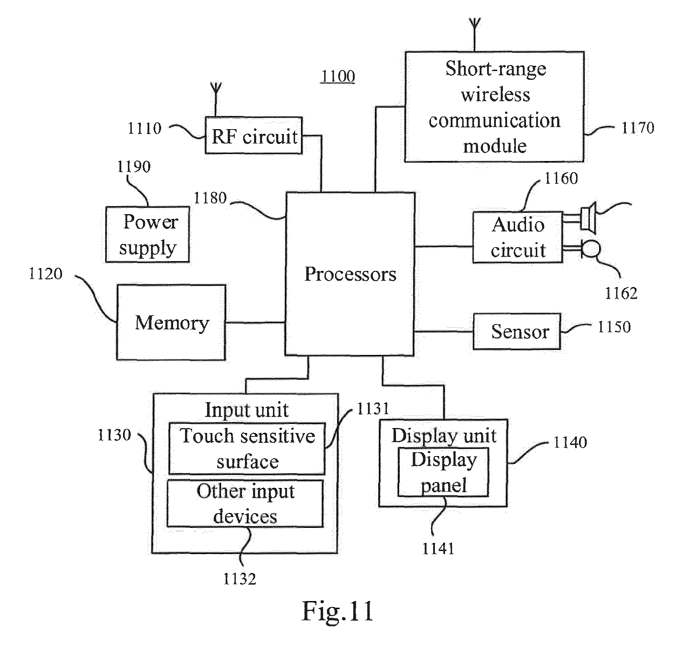

As illustrated in Fig. 11, it shows a block diagram of an electronic device according to an embodiment of the disclosure. The electronic device is configured to implement the method for displaying the notice information described by above embodiments. The electronic device 1100 in the present disclosure may include one or more components as follows: a processor configured to perform computer program instructions for completing a variety of procedures and methods; a random access memory (RAM) configured to store information and program instructions and a read only memory (ROM) configured to store information and data; a database configured to store tables, catalogues, and other data structure; a I/O apparatus; an interface; and an antenna. The detail is as follows:

The electronic device 1100 may include a radio frequency (RF) circuit 1110 that includes one or more computer readable memories 1120, an input unit 1130, a display unit 1140, a sensor 1150, an audio circuit 1160, a short-range wireless communication module 1170, one or more processors 1180 and a power supply 1190 and the like. The person skilled in the art should appreciate that the structure shown in Fig. 11 is not intended to limit the electronic device. The electronic device may include less or more components than those shown in Fig. 11, or include a combination of some components, or include various component arrangement. Wherein:

The RF circuit 1110 may be configured to send and receive signals during sending and receiving of information or a process of calling. In particular, the RF circuit receives downlink information from a base station and then transmits the information to the one or more processors 1180 to be processed. Moreover, the RF circuit transmits the related uplink data to the base station. Generally, the RF circuit served includes, but is not limited to, an antenna, at least one amplifier, a tuner, one or more oscillators, a transceiver, a coupler, a Low Noise Amplifier (LNA), a duplexer and the like. Additionally, RF circuit 1110 may also communicate with a network or other devices via a wireless network. The wireless network may adopt any one of communication standard or protocol including, but not limited to, Global System of Mobile communication (GSM), General Packet Radio Service (GPRS), Code Division Multiple Access (CDMA), Wideband Code Division Multiple Access (WCDMA), Long Term Evolution (LTE), email, Short Messaging Service (SMS) and the like.

The memory 1120 may be configured to store programs and modules. The processor 1180 performs various functions and processes data through operating programs and modules stored in the memory 1120. The memory 1120 may include a program storage area and a data storage area. The program storage area may store an operating system, at least one application program required by at least one function (such as sound play function, image play function and the like). The data storage area may store data created based on the operation of the electronic device 1100 (such as audio data, a phone book and the like). In addition, the memory 1120 may include a high speed random access memory. The memory 1120 may also include a nonvolatile memory, such as at least one disk storage, flash memory or other nonvolatile solid-state memories. Correspondingly, the memory 1120 may also include a memory controller to control access to the memory 1120 performed by the processor 1180 and the input unit 1130.

The input unit 1130 may be used to receive input information of numbers or characters and to generate signal input through a keyboard, a mouse, an operating rod, optical or trackball related to user settings and function control. For example, the input unit 1130 may include a touch sensitive surface 1131 and other input devices 1132. The touch sensitive surface 1131, also called a touch screen or a track pad, may collect touch operation on or near it (for example, the user performs operation on or near the touch sensitive surface 1131 with a finger, a stylus or any suitable object or attachment), and drive a corresponding connection device according to a preset program. Alternatively, the touch sensitive surface 1131 may include two parts, i.e., a touch detecting device and a touch controller. Wherein, the touch detecting device detects a touch orientation performed by the user and signals from the touch operation, and transmits the signals to the touch controller. The touch controller receives the touch information from the touch detecting device and converts it into touch point coordinates and then transmits the coordinates to the processor 1180. The touch controller also receives and performs instructions from the processor 1180. Additionally, the touch sensitive surface 1131 may be realized as a resistance touch sensitive surface, a capacitive touch sensitive surface, an infrared ray touch sensitive surface and a surface acoustic wave (SAW) touch sensitive surface and the like. The input unit 1130 may also include other kind of input devices 1132 in addition to the input unit 1130. For example, the other input devices 1132 may include, but not limited to, one or any combination of a physical keyboard, a function key (such as a volume control key, an on/off key and the like), a trackball, a mouse, an operating rod.

The display unit 1140 may be used to display information to or from the user and respective graphic user interface (GUI) of the terminal 1100 which may be formed by an image, a text, an icon, a video and any combination of them. The display unit 1140 may include a display panel 1141. Optionally, the display panel 141 may be configured with a Liquid Crystal Display (LCD), an Organic Light-Emitting Diode (OLED) and the like. Furthermore, the touch sensitive surface 1131 may be configured to cover the display panel 1141. When detecting the touch operation performed on or near the touch sensitive surface 1131, the touch sensitive surface 1131 transmit signals to the processor 1180 to determine a type of the touch event, then the processor 1180 provides corresponding vision output on the display panel 1141 according to the type of the touch event. Although the touch sensitive surface 1131 and the display panel 1141 are shown as two separate parts in Fig. 11 to perform input and output function, the touch sensitive surface 1131 may be integrated with the display panel 1141 in some embodiments to perform input and output function.

The electronic device 1100 may also include at least one sensor 1150 such as a photo sensor, a motion sensor and other sensors. For example, the photo sensor may include an ambient light sensor and a proximity sensor. Wherein, the ambient light sensor may adjust brightness of the display panel 1141 according to intensity of the ambient light. The proximity sensor may close the display panel and/or backlight when the electronic device 1100 is close to the user's ear. As one type of motion sensors, a gravitational acceleration sensor may detect values of accelerations in various directions (usually three axes); may detect a value and a direction of the gravitation when resting; and may be used in an application for identifying a mobile phone pose (such as switching between a landscape mode and a vertical mode, corresponding games, pose adjusting with a magnetometer), functions related to vibration (such as a pedometer, knocking) and the like. Other sensors such as a gyroscope, a barometer, a humidometer, a thermometer, an infrared sensor and the like which may be arranged in the electronic device 1100 will not be described in detailed.

The audio circuit 1160, a speaker 1161, a microphone 1162 may provide an audio interface between the user and the electronic device 1100. The audio circuit 1160 may convert the received audio data into electronic signals and transmit the electronic signals to the speaker 1161, and the speaker 1161 may convert the electronic signals into voice and output the voice. Additionally, the microphone 1162 may convert the collected voice signals into electronic signals; the audio circuit 160 receives the electronic signals and converts them into audio data; and the audio data is transmitted to the processor 1180 and then is transmitted to another terminal device via the RF circuit 1110 after it is processed by the processor; or the audio data is transmitted to the memory 1120 to be further processed. The audio circuit 1160 may also include an earplug jack to allow communication between a peripheral earphone and the electronic device 1100.

The short-range wireless communication module 1170 may be a wireless fidelity (WiFi) module. The electronic device 1100 may implement the application of e-mail service, Web page and streaming medium browse using the short-range wireless communication module 1170 which provides a broadband wireless communication with the Internet. Although the short-range wireless communication module 1170 is shown in Fig. 11, it should be understood that the wireless communication unit 1170 is not a necessary component of the electronic device 1100 and may be omitted based on actual needs in scope of not t changing the principle of the disclosure.

The processor 1180 is a control center of the electronic device 1100 and is connected to respective parts of the whole mobile phone via various interfaces and line links, and performs various functions and processes data through operating or performing programs and/or modules stored in the memory 1120 and calling data stored in the memory 1120, so as to achieve an overall control on the terminal. Optionally, the processor 1180 may include one or more processing cores. Preferably, the processor 1180 may be integrated with an application processor and a modem. The application processor is mainly used to control the operation system, the use interface, applications and the like. The modem is mainly used to handle the wireless communication. It should be understood that the above modem may be provided independently of the processor 1180.

The electronic device 1100 may also include the power supply 1190 (such as a battery) for providing power to each component. For example, the power supply may be logically connected to the processor 1180 through a power control system, so that the power control system may implement a power charge-discharge management and a power consumption management. The power supply 1190 may also include any components such as one or more DC or AC power supply, a recharge system, a power fault detecting circuit, a power adapter or inverter, a power status indicator and the like.

Although not shown, the electronic device 1100 may also include a camera, a Bluetooth module touch panel, etc., which will not described in detail. Specifically, the display unit of the electronic device 1100 is a touch screen display.

The electronic device 1100 may also include one or more processors 1180, memory, and one or more modules. Wherein, the one or more modules are stored in the memory and may be configured to perform using one or more processors. The one or more modules described above may have functions as follows: receiving the notice information sent from an application program, the received notice information includes one or more operation elements provided by the application program; and displaying the received notice information in a predetermined area, the predetermined area being an area displaying a status bar, or an area adjacent to the status bar, the status bar being arranged along an edge of a display.

In a first possible embodiment, the one or more modules described above may further have functions as follows: receiving an operation information generated when an operation element displayed in the received notice information is operated; and sending the operation information to the application program to process, wherein application program implements a process according to the operation information.

In the second embodiment, the one or more modules described above may further have functions as follows: deleting the displayed notice information after receiving the operation information generated.

In a third possible embodiment, the one or more modules described above may further have functions as follows: receiving an unfolding instruction generated when an unfolding operation on the displayed notice information is performed; and displaying the unfolded notice information after the unfolding instruction is received.

In a fourth possible embodiment, the one or more modules described above may further have functions as follows: receiving a hiding instruction, the instruction being generated when an operating position is not located in the predetermined area; and hiding the displayed notice information.

In a fifth possible embodiment, the one or more modules described above may further have functions as follows: when the predetermined area is the area displaying the status bar, the notice information displayed in the predetermined area includes:

determining a notice level corresponding to the received notice information, the notice level indicating a rank of importance of the notice information;

determining a display height of the received notice information according to content and/or the notice level of the received notice information;

extending a display height of the status bar according to the display height of the received notice information;

displaying the notice information in the status bar with the extended height.

In a sixth possible embodiment, the predetermined area includes at least one display page, and displaying the notice information in the predetermined area includes: determining whether a number of pieces of notice information that are already displayed on a current display page in the predetermined area is less than a predetermined number, the predetermined number being a maximum number of pieces of notice information that can be displayed on the current display page in the predetermined area;

if it is determined that the number of pieces of notice information that are already displayed on the current display page in the predetermined area is less than the predetermined number, displaying the received notice information on the current display page in the predetermined area; and

if it is determined that the number of pieces of notice information that are already displayed on the current display page in the predetermined area is not less than the predetermined number, refreshing the position of a piece of the notice information having a longest display time on the current display page in the predetermined area to display the received notice information.

In a seventh possible embodiment, the one or more modules described above may further have functions as follows:
receiving a page turning signal that instructs a page turning of the current display page in the predetermined area; and
turning the displayed current display page in the predetermined area to another display page corresponding to the page turning signal.

In an eighth possible embodiment, the one or more modules described above may further have functions as follows:
turning the displayed current display page in the predetermined area to another display page corresponding to the page turning signal includes:
when the page turning signal instructs to turn the current display page in the predetermined area to a next page and a next display page exists in the predetermined area, turning the current display page in the predetermined area to the next display page; and
when the page turning signal instructs to turn the display page in the predetermined area to a previous page and a previous display page exists in the predetermined area, turning the current display page in the predetermined area to the previous display page.

In summary, the embodiments of the present disclosure provide the electronic device for displaying notice information. By displaying the notice information in the area adjacent to the status bar or the area displaying the status bar, it can solve the problem that the method of displaying the current notice information has the impact on the current user operation. Displaying the notice information in the area displaying the status bar or the area adjacent to the status bar may not have an impact on other user operations, inasmuch as the status bar generally shows in the position located at the side edge of the electronic display. As a result, it may achieve a result which does not influence the user operation when informing the new notice information to users.

The present disclosure may further provide a computer readable access medium that store one or more programs. When the one or more programs are applied to electronic device, the electronic device performs the instructions as follows:

receiving the notice information sent from an application program, the notice information including one or more operation elements provided by the application program;

displaying the received notice information in a predetermined area, the predetermined area being an area displaying a status bar, or an area adjacent to the status bar, the status bar being arranged along an edge of a display.

In a first possible embodiment, the one or more programs described above may further perform instructions as follows:
receiving an operation information generated when an operation element displayed in the received notice information is operated; and
sending the operation information to the application program to process, wherein the application program implements a process according to the operation information.

In the second embodiment, the one or more programs described above may further perform instructions as follows:

deleting the displayed notice information after receiving the operation information generated.

In a third possible embodiment, the one or more programs described above may further perform instructions as follows:
receiving an unfolding instruction generated when an unfolding operation on the displayed notice information is performed; and
displaying the unfolded notice information after the unfolding instruction is received.

In a fourth possible embodiment, the one or more programs described above may further perform instructions as follow:
receiving a hiding instruction, the instruction being generated when an operating position is not located in the predetermined area; and
hiding the displayed notice information.

In a fifth possible embodiment, when the predetermined area is the area displaying the status bar, the notice information displayed in the predetermined area includes:
determining a notice level corresponding to the received notice information, the notice level indicating a rank of importance of the received notice information;
determining a display height of the received notice information according to content and/or the notice level of the notice information;
extending a display height of the status bar according to the display height of the received notice information; and
displaying the notice information in the status bar with the extended height.

In a sixth possible embodiment, the predetermined area includes at least one display page, and displaying the notice information in the predetermined area includes:
determining whether a number of pieces of notice information that are already displayed on a current display page in the predetermined area is less than a predetermined number, the predetermined number being a maximum number of pieces of notice information that can be displayed on the current display page in the predetermined area;
if it is determined that the number of pieces of notice information that are already displayed on the current display page in the predetermined area is less than the predetermined number, displaying the received notice information on the current display page in the predetermined area; and
if it is determined that the number of pieces of notice information that are already displayed on the current display page in the predetermined area is not less than the predetermined number, refreshing the position of a piece of the notice information having a longest display time on the current display page in the predetermined area to display the received notice information.

In a seventh possible embodiment, the one or more programs described above may further perform instructions as follows:
receiving a page turning signal that instructs a page turning of the current display page in the predetermined area; and
turning the displayed current display page in the predetermined area to another display page corresponding to the page turning signal.

In an eighth possible embodiment, the one or more programs described above may further perform instructions as follows:
turning the current display page in the predetermined area to another display page corresponding to the page turning signal includes:
when the page turning signal instructs to turn the current display page in the predetermined area to a next page and a next display page exists in the predetermined area, turning the current display page in the predetermined area to the next display page; and
when the page turning signal instructs to turn the display page in the predetermined area to a previous page and a previous display page exists in the predetermined area, turning the current display page in the predetermined area to the previous display page.

The reference numbers symbolized in the present disclosure is only used to support the illustration of the embodiments, which is not to represent a merits and demerits of the embodiments.

The person skilled in the art can understand that all of the steps or part of the steps illustrated by above embodiments can be implemented through the hardware. Also, they can be completed using programs controlling the related hardware. The program can be stored in a readable access medium such as a read-only memory, a magnetic disk, or an optical disk and the like.

The above descriptions are only for the preferred embodiments of the present disclosure, which are not used to limit the present invention. Various variations, identical substitutions and modifications made within the principles of the present invention.

## Claims

1. A method for displaying notice information, **characterized in that**, the method comprises:
receiving (201) the notice information sent from an application program, the received notice information including one or more operation elements provided by the application program; and
displaying (202) the received notice information (36) in a predetermined area, the predetermined area being an area displaying a status bar (32), or an area adjacent to the status bar, the status bar being arranged along an edge of a display.

2. The method according to of claim 1, **characterized in that**, when the predetermined area is the area displaying the status bar, displaying the notice information in a predetermined area comprises:
determining a notice level (1002a) corresponding to the received notice information, the notice level indicating a rank of importance of the received notice information;
determining a display height (1002b) of the received notice information according to content and/or the notice level of the received notice information;
extending a display height (1002c) of the status bar according to the display height of the received notice information; and
displaying the notice information (1002d) in the status bar with the extended height.

3. The method according to claim 1 or 2, **characterized in that**, the method further comprises:
receiving operation information (207) generated when an operation element displayed in the received notice information is operated; and
sending (208) the operation information to the application program to process, wherein the application program implements a process according to the operation information.

4. The method according to claim 3, **characterized in that**, the method further comprises:
deleting (209) the displayed notice information after receiving the operation information generated.

5. The method according to claim 1, 2, 3 or 4 **characterized in that**, the method further comprises:
receiving an unfolding instruction generated (203) when an unfolding operation on the displayed notice information is performed; and
displaying (204) the unfolded notice information after receiving the unfolding instruction.

6. The method according to any one of claims 1 to 5, **characterized in that**, the method further comprises:
receiving a hiding instruction, the instruction being generated when an operating position is not located in the predetermined area; and
hiding the displayed notice information.

7. The method according to any one of claims 1 to 5, **characterized in that**, the predetermined area comprises at least one display page, and displaying the notice information in a predetermined area comprises:
determining whether a number of pieces of notice information that are already displayed on a current display page in the predetermined area is less than a predetermined number, the predetermined number being a maximum number of pieces of notice information that can be displayed on the current display page in the predetermined area;
if it is determined that the number of pieces of notice information that are already displayed on the current display page in the predetermined area is less than the predetermined number, displaying the received notice information on the current display page in the predetermined area; and
if it is determined that the number of pieces of notice information that are already displayed on the current display page in the predetermined area is not less than the predetermined number, refreshing the position of a piece of the notice information having a longest display time on the current display page in the predetermined area to display the received notice information.

8. The method according to claim 7, **characterized in that**, the method further comprises:
receiving a page turning signal that instructs a page turning of the current display page in the predetermined area;
turning the current display page in the predetermined area to another display page corresponding to the page turning signal;
wherein turning the current display page in the predetermined area to another display page corresponding to the page turning signal comprises:
when the page turning signal instructs to turn the current display page in the predetermined area to a next display page and a next display page exists in the predetermined area, turning the current display page in the predetermined area to the next display page; and
when the page turning signal instructs to turn the display page in the predetermined area to a previous display page and a previous display page exists in the predetermined area, turning the current display page in the predetermined area to the previous display page.

9. An apparatus for displaying notice information, **characterized in that**, the apparatus comprises:
a notice information receiving module (1001) configured to receive the notice information sent from an application program, the received notice information including one or more operation elements provided by the application program; and
a display module (1002) configured to display the received notice information in a predetermined area, the predetermined area being an area displaying a status bar, or an area adjacent to the status bar, the status bar being arranged along an edge of a display.

10. The apparatus according to claim 9, **characterized in that**, the display module comprises:
a notice level determining sub-module (1002a) configured to determine a notice level corresponding to the received notice information when the predetermined area is the area displaying the status bar, the notice level indicating a rank of importance of the received notice information;
a first determining sub-module (1002b) configured to determine a display height of the received notice information according to content and/or the notice level of the received notice information;
a second determining sub-module (1002c) configured to extend a display height of the status bar according to the display height of the received notice information; and
a first display sub-module (1002d) configured to display the notice information in the status bar with the extended display height.

11. The apparatus according to claim 9 or 10, **characterized in that**, the apparatus further comprises:
an operation information receiving module (1003) configured to receive operation information generated when an operation element displayed in the received notice information is operated; and
a sending module (1004) configured to send the operation information to the application program to process, wherein the application program implements a process according to the operation information.

12. The apparatus according to claim 11, **characterized in that**, the apparatus further comprises:
a deleting module (1005) configured to delete the displayed notice information after the operation receiving module receives the operation information generated.

13. The apparatus according to claim 9, 10, 11 or 12, **characterized in that**, the apparatus further comprises:
an unfolding instruction receiving module (1006) configured to receive an unfolding instruction generated when an unfolding operation on the displayed notice information is performed; and
an unfolding display module (1007) configured to display the unfolded notice information after the unfolding display module receives the unfolding instruction.

14. The apparatus according to any one of claim 9 to 13, **characterized in that**, the apparatus further comprises:
a hiding instruction receiving module (1008) configured to receive a hiding instruction, the instruction being generated when an operating position is not located in the predetermined area; and
a hiding module configured to hide the displayed notice information.

15. The apparatus according to any one of claims 9 to 13, **characterized in that**, the predetermined area comprises at least one display page and the display module comprises:
a judging sub-module (1002e) configured to determine whether a number of pieces of notice information that are already displayed on a current display page in the predetermined area is less than a predetermined number, the predetermined number being a maximum number of pieces of notice information that can be displayed on the current display page in the predetermined area;
a second display sub-module (1002f) configured to display the received notice information on the current display page in the predetermined area if it is determined that the number of pieces of notice information that are already displayed on the current display page in the predetermined area is less than the predetermined number; and
a third display sub-module (1002g) configured to refresh the position of a piece of the notice information having a longest display time on the current display page in the predetermined area to display the received notice information if it is determined that the number of pieces of notice information that are already displayed on the current display page in the predetermined area is not less than the predetermined number.

16. The apparatus according to claim 15, **characterized in that**, the apparatus further comprises:
a page turning signal receiving module (1010) configured to receive a page turning signal that instructs a page turning of the current display page in the predetermined area;
a page turning module (1011) configured to turn the displayed current display page in the predetermined area to another display page corresponding to the page turning signal;
wherein the page turning module comprises:
a first page turning sub-module (1011a) configured to turn the current display page in the predetermined area to the next display page when the page turning signal instructs to turn the current display page in the predetermined area to a next display page and a next display page exists in the predetermined area; and
a second page turning sub-module (1011b) configured to turn the current display page in the predetermined area to the previous display page when the page turning signal instructs to turn the display page in the predetermined area to a previous display page and a previous display page exists in the predetermined area.

17. An electronic device, **characterized in that**, the electronic device comprises the apparatus for displaying notice information according to any one of claims 9 to 16, or the device comprises one or more processors and a memory for performing the steps of any of claims 1 to 8.

18. A computer program product having stored therein instructions that, when executed by an electronic device comprising one or more processors and a memory, causes the electronic device to perform the steps of any of claim 1 to 8.
